# EUROPEAN PATENT SPECIFICATION

(11) **EP 3 099 517 B1**
(45) Date of publication and mention of the grant of the patent: **28.06.2017**
(21) Application number: 15707808.0
(22) Date of filing: 27.01.2015
(51) Int. Cl.: B60C 13/04, B60C 15/06

(54) **TYRE WITH AN IMPROVED JOINT BETWEEN THE SIDEWALLS AND CORRESPONDING ABRASION GUM STRIPS**
REIFEN MIT EINER VERBESSERTEN VERBINDUNG ZWISCHEN DEN SEITENWÄNDEN UND ENTSPRECHENDE ABRIEBGUMMISTREIFEN
PNEU AVEC RACCORD AMÉLIORÉ ENTRE LES FLANCS ET BANDES DE GOMMES D'ABRASION CORRESPONDANTES

(30) Priority: 31.01.2014 IT RM20140048
(43) Date of publication of application: 07.12.2016
(73) Proprietor: Bridgestone Corporation, Tokyo 104-8340 (JP)
(72) Inventor: TOSCANO, Marco, I-00128 Roma (IT)
(74) Representative: Marchetti, Alessio
(86) International application number: PCT/IB2015/050604
(87) International publication number: WO 2015/114513

(56) References cited:
- EP-A2- 0 958 946

## Description

### FIELD OF THE ART

The present invention relates to a tyre.

The present invention finds advantageous application in a tyre for agricultural use (AGR tyre), thereto the following description will refer explicitly without losing generality due to this. It is important observing that under the definition "tyre for agricultural use" a tyre is meant destined to be used in working vehicles operating on grounds without asphalting, then a "tyre for agricultural use" is both a tyre for agricultural machines, and a tyre for earth-moving machines and the like.

### PRIOR ART

A tyre for agricultural use comprises a toroidal body, which is constituted by at least a body ply partially turned-up on itself and thus having on the sides two layers overlapped each other. On the opposite sides of the body two annular beads are disposed, each one is surrounded by the body ply. The body supports an annular tread with the interposition of a tread belt. Inside the body ply an innerliner is arranged, which is air-impermeable, it constitutes an inner coating and it has the function of keeping the air inside the tyre to maintain over time the inflation pressure of the tyre. The body ply supports a pair of Side Walls (SW) arranged outside the body ply between the tread and the beads. At last, the body ply supports a pair of Abrasion Gum Strips (AGS) located externally below the sidewalls and at the beads; when the tyre is assembled on the circle the abrasion gum strips are arranged in contact with the circle edges, then the abrasion gum strips are made of a mixture of gum having a high resistance to abrasion.

Usually, each side wall and the corresponding abrasion gum strip form one single indivisible element which is implemented by means of a procedure of co-extruding at least two different gum mixtures, respectively constituting the side wall and the abrasion gum strip. In other words, each side wall and the corresponding abrasion gum strip are co-extruded to result firmly joined as from the beginning (that is even before the tyre curing).

In the known tyres for agricultural use, the joining surface between each side wall and the corresponding abrasion gum strip has still in cross (axial) section a linear course. In most known tyres for agricultural use, the joining surface between each side wall and the corresponding abrasion gum strip is oriented radially from inwards outwards, that is it extends from an axially outer and radially further inner end (that is radially nearer to the bead) to an axially inner and radially further outer end (that is radially farer from the bead). In some known tyres for agricultural use, the joining surface between each side wall and the corresponding abrasion gum strip is oriented in opposite way from outwards inwards, that is it extends from an axially outer and radially further outer end (that is radially farer from the bead) to an axially inner and radially further inner end (that is radially nearer to the bead).

EP 0 958 946, corresponding with the preamble of claim 1, describes a tyre of the above-mentioned type.

The purpose of all manufacturers of tyres for agricultural use is to succeed in diminishing the tyre mass (that is the overall quantity of the materials used for the construction of the tyre itself) by maintaining yet an adequately long operating life (that is by avoiding that in the tyre ruptures prematurely form invalidating the use of the tyre itself).

### DESCRIPTION OF THE INVENTION

The object of the present invention is to provide a tyre, which has an adequately long operating life, it has a limited mass and, at the same time, it is easy and economical to be implemented.

According to the present invention a tyre is provided according to what established by the enclosed claims.

### BRIEF DESCRIPTION OF THE DRAWINGS

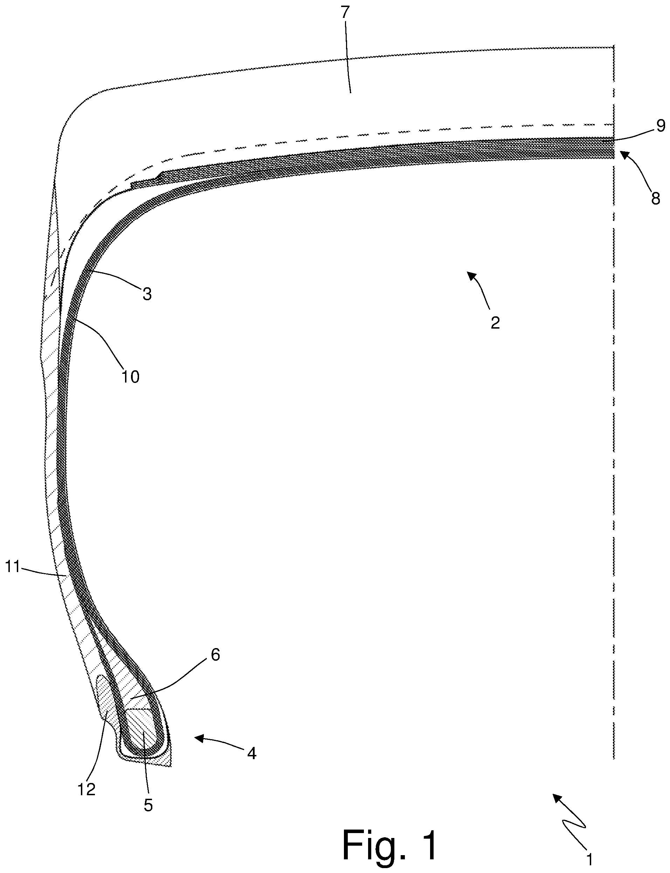

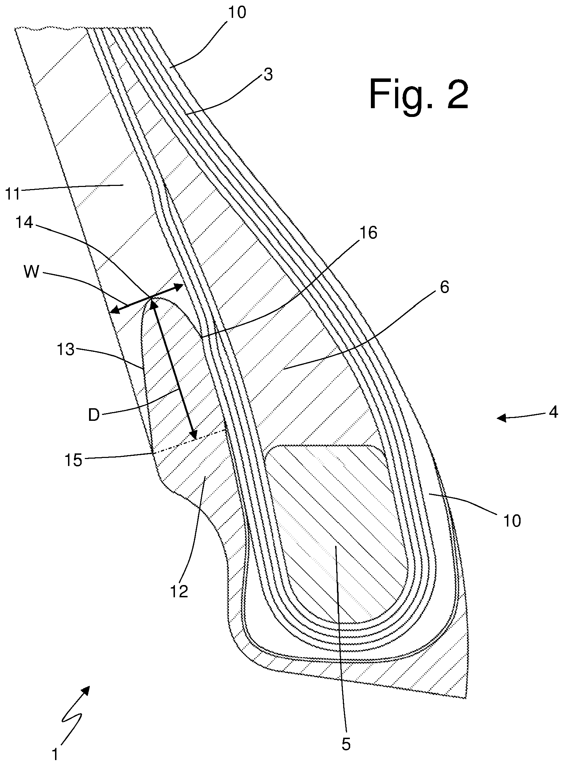

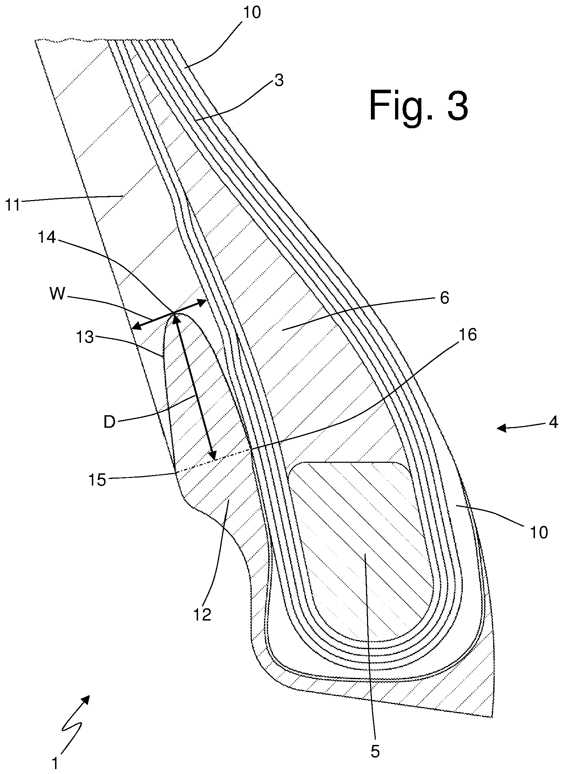

The present invention will be now described by referring to the enclosed drawings, which illustrate a not limiting embodiment example, wherein:
▪ figure 1 is a schematic cross-section, with removed portions for sake of clarity of portion of a tyre implemented according to the present invention;
▪ figure 2 is a view in enlarged scale of an area of the bead of the tyre of figure 1; and
▪ figure 3 is a view in enlarged scale of an area of the bead of an alternative embodiment of the tyre of figure 1.

### PREFERRED EMBODIMENTS OF THE INVENTION

In figure 1, a tyre for agricultural use is designated as a whole with number 1, comprising a toroidal body 2, which is constituted by a body ply 3 partially turned-up on itself.

On the opposite sides of the body 2 two annular beads 4 are arranged, each one thereof is surrounded by the body ply 3 and has a bead core 5 reinforced with a number of rounds of a metal wire and a bead filler 6.

The body 2 supports an annular tread 7; between the body 2 and the tread 7 a tread belt 8 is interposed, which comprises one or more tread plies 9. Each tread ply 9 comprises a number of (not illustrated) strings, which are immersed in a rubber band, they are arranged side-by-side with a determined pitch and form a tilting angle determined with an equatorial plane of the tyre 1.

Inside the body ply 3 an innerliner 10 is disposed which is air-impermeable, it constitutes an inner coating and it has the function of keeping the air inside the tyre 1 to maintain over time the inflation pressure of the tyre 1.

The body ply 3 supports a pair of side walls 11 arranged outside the body ply 3 between the tread 7 and the beads 4.

At last, the body ply 3 supports a pair of Abrasion Gum Strips 12 (AGS) located externally below the sidewalls 11 and at the beads 4 (even above the innerliner 10). When the tyre 1 is assembled on the circle, the abrasion gum strips 12 are arranged in contact with the edges of the circle and they have the function of protecting the beads 4 from the abrasion action exerted by the circle; consequently, the abrasion gum strips 12 are made of a mixture of hard gum having a high resistance to abrasion.

Obviously, the real tyre 1 even includes additional completely known and conventional components (for example the *"cap ply"* and the *"Tread Ply Insert -* TPI") which by sake of simplicity have not been illustrated and described.

As better illustrated in figure 2, each side wall 11 and the corresponding abrasion gum strip 12 belong to a single combined element (that is they form a single monolithic element) which is implemented by means of a procedure of co-extruding at least two mixtures of different gums and respectively constituting the side wall 11 and the abrasive gum strip 12. In other words, each side wall 11 and the corresponding abrasion gum strip 12 are co-extruded together to result firmly joined as from the beginning (that is even before the curing of the tyre 1).

Between each side wall 11 and the corresponding abrasion gum strip 12 a joining surface 13 is defined, which constitutes the area wherein the lower (that is radially inner) end of the side wall 11 touches (that is joins with) the upper (that is radially outer) end of the abrasion gum strip 12. According to what illustrated in figure 2, the joining surface 13 between each side wall 11 and the corresponding abrasion gum strip 12 has in cross (that is axial) section a "U"-like shape.

In the embodiment illustrated in figure 2, the joining surface 13 between each side wall 11 and the corresponding abrasion gum strip 12 has in cross (that is axial) section a "U"-like shape oriented towards the bead 4; in other words, the joining surface 13 between each side wall 11 and the corresponding abrasion gum strip 12 has a vertex (cuspid) 14 which is arranged further outwards radially than the two ends 15 and 16 of the joining surface 13 itself. According to an alternative not illustrated embodiment, the joining surface 13 between each side wall 11 and the corresponding abrasion gum strip 12 has in cross (that is axial) section a "U"-like shape oriented towards the tread 7 (that is overturned with respect to what illustrated in figure 2); in other words, the joining surface 13 between each side wall 11 and the corresponding abrasion gum strip 12 has a vertex 14 which is arranged further inwards radially than the two ends 15 and 16 of the joining surface 13 itself.

In the embodiment illustrated in figure 2, an axially outer end 15 of the joining surface 13 between each side wall 11 and the corresponding abrasion gum strip 12 is arranged further inwards radially (that is radially nearer to the bead 4) than an axially inner end 16 of the joining surface 13 itself. According to an alternative embodiment illustrated in figure 3, the axially outer end 15 of the joining surface 13 between each side wall 11 and the corresponding abrasion gum strip 12 is arranged radially at the same height of the axially inner end 16 of the joining surface 13 itself. According to an additional not illustrated embodiment, the axially outer end 15 of the joining surface 13 between each side wall 11 and the corresponding abrasion gum strip 12 is arranged further outwards radially (that is radially farer from the bead 4) than the axially inner end 16 of the joining surface 13 itself.

According to a preferred embodiment, a radial distance D between the vertex 14 of the joining surface 13 between each side wall 11 and the corresponding abrasion gum strip 12 and the end 15 or 16 radially farer from the vertex of the joining surface 13 itself is at least equal to the axial thickness W of the side wall 11 at the vertex 14 of the joining surface 13; in the embodiment illustrated in figure 2, the end 15 radially farer from the vertex 14 of the joining surface 13 is the axially outer end 15, whereas in the embodiment illustrated in figure 3, the two ends 15 and 16 of the joining surface 13 have substantially the same radial distance from the vertex 14.

The fact that in each joining surface 13 the distance D is at least equal to the axial thickness W contributes to optimize the distribution of mechanical stresses at the joining surface 13 itself.

According to a preferred embodiment, the radius of the joining surface 13 between each side wall 11 and the corresponding abrasion gum strip 12 at its own vertex 14 equals at least equal to 75% of the radius of the osculating circle corresponding to the vertex 14 of the parabola through both the vertex 14, and both ends 15 and 16 of the joining surface 13 itself; such correlation contributes to optimize the distribution of the mechanical stresses at the joining surface 13.

The above-described tyre 1 has several advantages.

First of all, in the above-described tyre 1 the particular shape of the joining surface 13 between each side wall 11 and the corresponding abrasion gum strip 12 allows reducing the mechanical stresses that upon use originate in this area of the tyre 1. In other words, in the above-described tyre 1 the particular shape of the joining surface 13 between each side wall 11 and the corresponding abrasion gum strip 12 allows reducing the frequency and the size of possible cracks which can generate upon use in this area of the tyre 1. In this way, the above-described tyre 1 has a considerably longer duration, that is a useful life, than an analogous known tyre wherein the joining surface between each side wall and the corresponding abrasion gum strip is of conventional type (that is it has in cross-section a linear course). Therefore, by keeping the duration, that is the useful life, unaltered with respect to an analogous known tyre, the above-described tyre 1 results lighter as it is possible reducing the thickness (that is the mass) of the side walls 11 and of the abrasive gum strips 12.

Furthermore, the above-described tyre 1 is simple to be constructed as the modes for implementing the junction between each side wall 11 and the corresponding abrasion gum strip 12 do not suffer from any significant modification with respect to an analogous known tyre; in fact, in order to vary the shape of the joining surface 13 between each side wall 11 and the corresponding abrasion gum strip 12 it is sufficient to shape suitably the extrusion mould which is used to co-extrude together the side wall 11 and the corresponding abrasion gum strip 12.

## Claims

1. A tyre (1) comprising:
- an at least partially turned-up body ply (3);
- two beads (4) arranged on opposite sides of the body ply (3) and surrounded by the body ply (3);
- a tread (7) supported by the body ply (3);
- two side walls (11) arranged outside the body ply (3) between the tread (7) and the beads (4); and
- two abrasion gum strips (12) arranged externally below the sidewalls (11) and at the beads (4),
wherein between each side wall (11) and the corresponding abrasion gum strip (12) a joining surface (13) is defined, extending, in cross section, between an axially outer first end (15) and an axially inner second end (16),
wherein the tyre (1) is **characterized in that** each joining surface (13), in cross-section, has a "U"-like shape.

2. The tyre (1) according to claim 1, wherein the joining surface (13) between each side wall (11) and the corresponding abrasion gum strip (12) has in cross-section a "U"-like shape oriented towards the bead (4).

3. The tyre (1) according to claim 1, wherein the joining surface (13) between each side wall (11) and the corresponding abrasion gum strip (12) has in cross-section a "U"-like shape oriented towards the tread (7).

4. The tyre (1) according to claim 1, 2 or 3, wherein said axially outer end (15) of the joining surface (13) between each side wall (11) and the corresponding abrasion gum strip (12) is arranged further inwards radially than said axially inner end (16) of the joining surface (13) itself.

5. The tyre (1) according to claim 1, 2 or 3, wherein said axially outer end (15) of the joining surface (13) between each side wall (11) and the corresponding abrasion gum strip (12) is arranged further outwards radially than said axially inner end (16) of the joining surface (13) itself.

6. The tyre (1) according to claim 1, 2 or 3, wherein said axially outer end (15) of the joining surface (13) between each side wall (11) and the corresponding abrasion gum strip (12) is arranged radially at the same height as said axially inner end (16) of the joining surface (13) itself.

7. The tyre (1) according to one of claims 1 to 6, wherein a radial distance (D) between a vertex (14) of the joining surface (13) between each side wall (11) and the corresponding abrasion gum strip (12) and the end (15) of the joining surface (13) itself radially farer from the vertex (14) is at least equal to the axial thickness (W) of the side wall (11) at the vertex (14) of the joining surface (13).

8. The tyre (1) according to one of claims 1 to 7, wherein the radius of the joining surface (13) between each side wall (11) and the corresponding abrasion gum strip (12) at its own vertex (14) equals at least 75% of the radius of the osculating circle corresponding to the vertex (14) of the parabola passing through both the vertex (14), and both ends (15, 16) of the joining surface (13) itself.

9. The tyre (1) according to one of claims 1 to 8, wherein said joining surface (13) between each side wall (11) and the corresponding abrasion gum strip (12) has in cross-section a "U"-like shape having a parabolic course.

10. The tyre (1) according to one of claims 1 to 9, wherein the tyre (1) is for agricultural use.

## Patentansprüche

1. Reifen (1), umfassend:
- eine mindestens teilweise umgeschlagene Karkassenlage (3);
- zwei Wülste (4), die auf gegenüberliegenden Seiten der Karkassenlage (3) angeordnet und von der Karkassenlage (3) eingefasst sind;
- eine Lauffläche (7), die von der Karkassenlage (3) getragen wird;
- zwei Seitenwände (11), die außerhalb der Karkassenlage (3) zwischen der Lauffläche (7) und den Wülsten (4) angeordnet sind; und
- zwei Abriebgummistreifen (12), die außen unter den Seitenwänden (11) und den Wülsten (4) angeordnet sind,
wobei zwischen jeder Seitenwand (11) und dem entsprechenden Abriebgummistreifen (12) eine Verbindungsoberfläche (13) definiert ist, die sich im Querschnitt zwischen einem axial äußeren ersten Ende (15) und einem axial inneren zweiten Ende (16) erstreckt,
wobei der Reifen (1) **dadurch gekennzeichnet ist, dass** jede Verbindungsoberfläche (13) im Querschnitt eine "U"-ähnliche Form aufweist.

2. Reifen (1) nach Anspruch 1, wobei die Verbindungsoberfläche (13) zwischen jeder Seitenwand (11) und dem entsprechenden Abriebgummistreifen (12) im Querschnitt eine in Richtung des Wulstes (4) ausgerichtete "U"-ähnliche Form aufweist.

3. Reifen (1) nach Anspruch 1, wobei die Verbindungsoberfläche (13) zwischen jeder Seitenwand (11) und dem entsprechenden Abriebgummistreifen (12) im Querschnitt eine in Richtung der Lauffläche (7) ausgerichtete "U"-ähnliche Form aufweist.

4. Reifen (1) nach Anspruch 1, 2 oder 3, wobei das axial äußere Ende (15) der Verbindungsoberfläche (13) zwischen jeder Seitenwand (11) und dem entsprechenden Abriebgummistreifen (12) radial weiter nach innen angeordnet ist als das axial innere Ende (16) der Verbindungsoberfläche (13) selbst.

5. Reifen (1) nach Anspruch 1, 2 oder 3, wobei das axial äußere Ende (15) der Verbindungsoberfläche (13) zwischen jeder Seitenwand (11) und dem entsprechenden Abriebgummistreifen (12) radial weiter nach außen angeordnet ist als das axial innere Ende (16) der Verbindungsoberfläche (13) selbst.

6. Reifen (1) nach Anspruch 1, 2 oder 3, wobei das axial äußere Ende (15) der Verbindungsoberfläche (13) zwischen jeder Seitenwand (11) und dem entsprechenden Abriebgummistreifen (12) radial auf der gleichen Höhe angeordnet ist wie das axial innere Ende (16) der Verbindungsoberfläche (13) selbst.

7. Reifen (1) nach einem der Ansprüche 1 bis 6, wobei ein radialer Abstand (D) zwischen einem Scheitel (14) der Verbindungsoberfläche (13) zwischen jeder Seitenwand (11) und dem entsprechenden Abriebgummistreifen (12) und dem Ende (15) der Verbindungsoberfläche (13) selbst, das radial weiter vom Scheitel (14) entfernt ist, mindestens gleich der axialen Dicke (W) der Seitenwand (11) am Scheitel (14) der Verbindungsoberfläche (13) ist.

8. Reifen (1) nach einem der Ansprüche 1 bis 7, wobei der Radius der Verbindungsoberfläche (13) zwischen jeder Seitenwand (11) und dem entsprechenden Abriebgummistreifen (12) am eigenen Scheitel (14) mindestens gleich 75 % des Radius des Krümmungskreises beträgt, der dem Scheitel (14) der Parabel entspricht, die sowohl durch den Scheitel (14) als auch durch beide Enden (15, 16) der Verbindungsoberfläche (13) selbst verläuft.

9. Reifen (1) nach einem der Ansprüche 1 bis 8, wobei die Verbindungsoberfläche (13) zwischen jeder Seitenwand (11) und dem entsprechenden Abriebgummistreifen (12) im Querschnitt eine "U"-ähnliche Form mit einem parabelartigen Verlauf aufweist.

10. Reifen (1) nach einem der Ansprüche 1 bis 9, wobei der Reifen (1) zur landwirtschaftlichen Nutzung dient.

## Revendications

1. Pneumatique (1) comprenant :
- une nappe carcasse (3) au moins partiellement relevée ;
- deux talons (4) disposés sur les côtés opposés de la nappe carcasse (3) et entourés par la nappe carcasse (3) ;
- une bande de roulement (7) soutenue par la nappe carcasse (3) ;
- deux parois latérales (11) disposées à l'extérieur de la nappe carcasse (3) entre la bande de roulement (7) et les talons (4) ; et
- deux bandelettes de gomme d'abrasion (12) disposées de façon externe en dessous des parois latérales (11) et au niveau des talons (4),
dans lequel entre chaque paroi latérale (11) et la bandelette de gomme d'abrasion (12) correspondante, une surface de raccordement (13) est définie, s'étendant, en coupe transversale, entre une première extrémité (15) axialement externe et une deuxième extrémité (16) axialement interne,
où le pneumatique (1) est **caractérisé en ce que** chaque surface de raccordement (13), en coupe transversale, a une forme ressemblant à un « U ».

2. Le pneumatique (1) selon la revendication 1, dans lequel la surface de raccordement (13) entre chaque paroi latérale (11) et la bandelette de gomme d'abrasion (12) correspondante a, en coupe transversale, une forme ressemblant à un « U », orientée vers le talon (4).

3. Le pneumatique (1) selon la revendication 1, dans lequel la surface de raccordement (13) entre chaque paroi latérale (11) et la bandelette de gomme d'abrasion (12) correspondante a, en coupe transversale, une forme ressemblant à un « U », orientée vers la bande de roulement (7).

4. Le pneumatique (1) selon la revendication 1, 2 ou 3, dans lequel ladite extrémité (15) axialement externe de la surface de raccordement (13) entre chaque paroi latérale (11) et la bandelette de gomme d'abrasion (12) correspondante est disposée davantage vers l'intérieur en sens radial que ladite extrémité (16) axialement interne de la surface de raccordement (13) elle-même.

5. Le pneumatique (1) selon la revendication 1, 2 ou 3, dans lequel ladite extrémité (15) axialement externe de la surface de raccordement (13) entre chaque paroi latérale (11) et la bandelette de gomme d'abrasion (12) correspondante est disposée davantage vers l'extérieur en sens radial que ladite extrémité (16) axialement interne de la surface de raccordement (13) elle-même.

6. Le pneumatique (1) selon la revendication 1, 2 ou 3, dans lequel ladite extrémité (15) axialement externe de la surface de raccordement (13) entre chaque paroi latérale (11) et la bandelette de gomme d'abrasion (12) correspondante est disposée à la même hauteur en sens radial que ladite extrémité (16) axialement interne de la surface de raccordement (13) elle-même.

7. Le pneumatique (1) selon l'une des revendications 1 à 6, dans lequel une distance radiale (D) entre un sommet (14) de la surface de raccordement (13) entre chaque paroi latérale (11) et la bandelette de gomme d'abrasion (12) correspondante et l'extrémité (15) de la surface de raccordement (13), elle-même plus éloignée en sens radial du sommet (14), est au moins égale à l'épaisseur axiale (W) de la paroi latérale (11) au niveau du sommet (14) de la surface de raccordement (13).

8. Le pneumatique (1) selon l'une des revendications 1 à 7, dans lequel le rayon de la surface de raccordement (13) entre chaque paroi latérale (11) et la bandelette de gomme d'abrasion (12) correspondante au niveau de son propre sommet (14) est égal à au moins 75% du rayon du cercle osculateur correspondant au sommet (14) de la parabole passant à la fois à travers le sommet (14) et l'une et l'autre des extrémités (15, 16) de la surface de raccordement (13) elle-même.

9. Le pneumatique (1) selon l'une des revendications 1 à 8, dans lequel ladite surface de raccordement (13) entre chaque paroi latérale (11) et la bandelette de gomme d'abrasion (12) correspondante a, en coupe transversale, une forme ressemblant à un « U » possédant une trajectoire parabolique.

10. Le pneumatique (1) selon l'une des revendications 1 à 9, où le pneumatique (1) est destiné à une utilisation agricole.
